# EUROPÄISCHE PATENTSCHRIFT

(11) **EP 3 179 121 B1**
(45) Veröffentlichungstag und Bekanntmachung des Hinweises auf die Patenterteilung: **17.04.2019**
(21) Anmeldenummer: 16200131.7
(22) Anmeldetag: 23.11.2016
(51) Int. Cl.: F16C 32/04, D01H 4/12

(54) **ELEKTRISCHER ANTRIEB UND OFFENEND-SPINNEINRICHTUNG MIT DEM ELEKTRISCHEN ANTRIEB**
ELECTRICAL PROPULSION AND OPEN-END SPINNING DEVICE WITH THE ELECTRICAL PROPULSION
ENTRAINEMENT ÉLECTRIQUE ET GROUPE DE FILAGE À BOUT OUVERT AVEC L'ENTRAINEMENT ÉLECTRIQUE

(30) Priorität: 11.12.2015 DE 102015016055
(43) Veröffentlichungstag der Anmeldung: 14.06.2017
(73) Patentinhaber: Saurer Spinning Solutions GmbH & Co. KG, 52531 Übach-Palenberg (DE)
(72) Erfinder: Balboul, Nour-Eddine, 50969 Köln (DE)
(74) Vertreter: Schniedermeyer, Markus

(56) Entgegenhaltungen:
- EP-A1- 1 154 340
- EP-A1- 1 170 408
- EP-A2- 2 006 557
- DE-A1- 4 114 566
- DE-A1-102005 032 184

## Beschreibung

Die vorliegende Erfindung betrifft einen elektrischen Antrieb. Der elektrische Antrieb umfasst einen passiv magnetisch gelagerten Läufer, mindestens einen Aktor zur Regelung der Lage des Läufers in der instabilen Richtung der magnetischen Lagerung, eine erste Regeleinrichtung zur Regelung der Lage des Läufers in der instabilen Richtung. Die erste Regeleinrichtung ist dazu ausgebildet, einen Aktor zur Regelung der Lage des Läufers in der instabilen Richtung mit einem Strom zu beaufschlagen und die Lage des Läufers in der instabilen Richtung so zu regeln, dass der Aktor im stationären Zustand keinen Strom führt.

Ein elektrischer Antrieb umfasst einen feststehenden Stator und einen relativ zum Stator rotierenden Läufer. Die Lagerung des Läufers erfolgt üblicherweise mittels Wälzlagern. Bei Antrieben, die bei hohen Drehzahlen betrieben werden, sind Wälzlager aufgrund der auftretenden Reibung jedoch ungeeignet. Für solche Zwecke sind magnetische Lagerungen bekannt. Die magnetische Lagerung erfolgt berührungslos und damit reibungsfrei. Es gibt aktive magnetische Lagerungen mittels Elektromagneten. Des Weiteren sind passive magnetische Lagerungen bekannt. Eine passive magnetische Lagerung erfolgt mittels Permanentmagneten. Nach dem Theorem von Eamshaw ist eine passive magnetische Lagerung in einer Raumrichtung instabil. Deshalb ist auch bei passiven magnetischen Lagerungen ein Aktor zur Regelung der Lage des Läufers in der instabilen Richtung erforderlich. Ein solcher Aktor kann beispielsweise als elektrische Spule ausgebildet sein, die mit einem Strom beaufschlagt wird und ein Magnetfeld erzeugt. Wenn sich der Läufer im Gleichgewicht befindet, ist kein Strom durch den Aktor erforderlich. Die Permanentmagnete auf dem Stator und dem Läufer sorgen dafür, dass der Läufer schwebt. Nur bei äußeren Störeinflüssen wird das Gleichgewicht gestört. In diesem Fall kann das Magnetfeld des Aktors den Läufer wieder in das Gleichgewicht bringen.

Die DE 10 2005 032 184 A1 offenbart einen solchen elektrischen Antrieb mit einem passiv magnetisch gelagerten Läufer. Die Bestromung des Aktors erfolgt dabei mittels einer sogenannten Nullstromregelung. Die Regeleinrichtung bringt den Läufer in eine Position, in der der Aktor keinen Strom führt und sich der Läufer im Gleichgewicht befindet.

Der elektrische Antrieb der DE 10 2005 032 184 A1 weist Fanglager auf. Der Läufer liegt vor Inbetriebnahme des elektrischen Antriebs an einem der Fanglager an. Während des stationären Betriebes ist der Läufer von den Fanglagern durch einen Lagerluftspalt beabstandet. Beim Auftreten von Störkräften verschiebt sich das Gleichgewicht oder anders ausgedrückt, der kräftefreie Schwebezustand des Läufers in Richtung eines der Fanglager. Der Lagerluftspalt wird überwacht. Dies geschieht durch Auswertung eines Signals der Regeleinrichtung. Wenn der Lagerluftspalt einen vorgegebenen Grenzwert passiert, wird der elektrische Antrieb abgeschaltet. Damit wird eine Kollision des Läufers mit den Fanglagern verhindert.

Elektrische Antriebe mit magnetisch gelagertem Läufer finden zum Beispiel Anwendung in Textilmaschinen. Solche Textilmaschinen sind zum Beispiel Offenend-Spinnmaschinen, die eine Vielzahl nebeneinander angeordneter Arbeitsstellen aufweisen. Die Arbeitsstellen umfassen jeweils eine Offenend-Spinneinrichtung mit einem Spinnrotor, der wiederum einen Rotorschaft und eine mit dem Rotorschaft verbundene Rotortasse umfasst. Der Spinnrotor weist einen individuellen elektrischen Antrieb mit einem magnetisch gelagerten Läufer auf. Dazu ist der Rotorschaft des. Spinnrotors als Läufer des elektrischen Antriebs ausgebildet. Die Rotortasse ist in einem verschließbaren Gehäuse, das während des Spinnbetriebes mit einem Unterdruck beaufschlagt wird.

Die bekannte Überwachung des Lagerluftspaltes und die rechtzeitige Abschaltung des elektrischen Antriebs können zwar bei Störeinflüssen eine Kollision des Läufers mit den Fanglagern verhindern; bei Produktionsmaschinen, wie der oben beschriebenen Offenend-Spinnmaschine führt eine solche Abschaltung jedoch zu einem Produktionsausfall, der die Produktivität der Maschine unerwünscht herabsetzt.

Es ist daher die Aufgabe der vorliegenden Erfindung, einen elektrischen Antrieb mit magnetisch gelagertem Läufer bereitzustellen, der unempfindlicher gegen Störeinflüsse ist, die das magnetische Gleichgewicht des Läufers beeinflussen.

Zur Lösung der Aufgabe ist eine zweite Regeleinrichtung zur Regelung der Lage des Läufers in der instabilen Richtung vorhanden. Die zweite Regeleinrichtung ist dazu ausgebildet, einen die Lage des Läufers repräsentierenden Wert auszuwerten und in Abhängigkeit des Wertes einen Aktor zur Regelung der Lage in der instabilen Richtung so zu beeinflussen, dass der Aktor im stationären Zustand einen vorgegebenen stationären Aktorstrom führt.

Die vorliegende Erfindung ermöglicht beim Auftreten von Störkräften, die eine unerwünschte Lageänderung des Läufers zur Folge haben, einen Eingriff in die bestehende Nullstromregelung vorzunehmen und damit eine Rückführung des Läufers in die gewünschte Lage zu ermöglichen. Damit wird einer weiteren Lageänderung des Läufers, die eine Abschaltung des Antriebs notwendig machen würde, entgegengewirkt.

Der ersten und der zweiten Regeleinrichtung kann jeweils ein eigener Aktor zugeordnet sein. Es ist jedoch besonders vorteilhaft, der ersten Regeleinrichtung und der zweiten Regeleinrichtung einen gemeinsamen Aktor zur Regelung der Lage in der instabilen Richtung zuzuordnen und die zweite Regeleinrichtung dazu auszubilden, zur Beeinflussung des gemeinsamen Aktors die erste Regeleinrichtung zu beeinflussen.

Es ist zu beachten, dass die Regelung der zweiten Regeleinrichtung der Regelung der ersten Regeleinrichtung überlagert ist. Das heißt, bei dynamischen Störkräften, die den Läufer aus dem Gleichgewicht bringen, greift zunächst die erste Regeleinrichtung ein und beaufschlagt den Aktor so mit einem Strom, dass der Läufer wieder in eine Lage überführt wird, in der er sich im Gleichgewicht befindet und der Aktor keinen Strom führt. Erst bei weniger dynamischen oder stationären Störkräften greift die Regelung der zweiten Regeleinrichtung ein und beeinflusst die erste Regeleinrichtung derart, dass der Aktor auch im stationären Zustand einen von Null verschiedenen Strom führt.

Die zweite Regeleinrichtung beeinflusst die erste Regeleinrichtung vorzugsweise derart, dass innerhalb der Regelung der ersten Regeleinrichtung ein Offset aufaddiert wird. Der Offset in der Regelung der ersten Regeleinrichtung wird dabei derart gewählt, dass der Aktor im stationären Zustand den vorgegebenen stationären Aktorstrom führt.

Die erste Regeleinrichtung kann in an sich bekannter Weise einen Stromregler und einen Lageregler umfassen.

Gemäß einer vorteilhaften Ausführungsform der vorliegenden Erfindung wird der Offset am Ausgang des Stromreglers aufaddiert.

Gemäß einer alternativen, ebenfalls vorteilhaften Ausführungsform wird der Offset am Ausgang des Lagereglers aufaddiert.

Gemäß einer weiteren vorteilhaften Ausführungsform weist der elektrische Antrieb einen Lagesensor zur Erfassung der Lage des magnetisch gelagerten Läufers auf und der die Lage des Läufers repräsentierende Wert hängt von dem Signal des Lagesensors ab. Der Lagesensor kann entweder die Lage des Läufers in der instabilen Richtung oder die Lage des Läufers in der stabilen Richtung erfassen. Ach wenn es gemäß der vorliegenden Erfindung um die Regelung der Lage des Läufers in der instabilen Richtung geht, haben Änderungen der Lage des Läufers in der instabilen Richtung auch Einfluss auf die Steifigkeit der magnetischen Lagerung in der stabilen Richtung. Aus diesem Grunde haben in der instabilen Richtung wirkende Störkräfte auch Auswirkung auf die Lage des Läufers in der stabilen Richtung.

Ein Lagesensor, der die Lage des Läufers in der instabilen Richtung erfasst, kann gleichzeitig ein Signal für die erste Regeleinrichtung bereitstellen. Ein Lagesensor, der die Lage des Läufers in der stabilen Richtung erfasst, kann gleichzeitig ein Signal für eine übliche Dämpfungseinrichtung zur Dämpfung von Schwingungen in der stabilen Richtung bereitstellen.

Zur Erfassung eines die Lage des Läufers repräsentierenden Wertes muss nicht unbedingt das Signal des Lagesensors selbst verwendet werden, es kann auch ein anderes Signal verwendet werden, das von dem Signal des Lagesensors abhängt, oder in anderer Weise die Lage des Läufers anzeigt.

Gemäß einer möglichen Ausführungsform der vorliegenden Erfindung hängt der die Lage des Läufers repräsentierende Wert von dem Ausgang des Stromreglers der ersten Regeleinrichtung ab. Der die Lage des Läufers repräsentierende Wert kann auch von dem Ausgang des Lagereglers der ersten Regeleinrichtung abhängen. Es können auch mehrere Werte, die die Lage des Läufers repräsentieren, für die Auswertung der zweiten Regeleinrichtung verwendet werden.

Der magnetischen Lagerung des Läufers des erfindungsgemäßen Antriebs kann, wie an sich bekannt, ein Fanglager zugeordnet sein, zu dem der Läufer im Betrieb durch einen Lagerluftspalt beabstandet ist. Gemäß einer vorteilhaften Ausführungsform des erfindungsgemäßen Antriebs beeinflusst die zweite Regeleinrichtung einen Aktor, wenn der die Lage des Läufers repräsentierende Wert das Unterschreiten eines vorgegebenen Grenzwertes des Lagerluftspaltes anzeigt. Dieser Grenzwert kann entsprechend kleiner gewählt werden, als ein Grenzwert, der, wie im Stand der Technik bekannt, zu einer Abschaltung des Antriebes führt. Bei auftretenden Störkräften kann das System damit frühzeitig beeinflusst und stabilisiert werden. Natürlich ist es möglich, zwei Grenzwerte für den Lagerluftspalt zu definieren. Einen ersten Grenzwert des Lagerluftspaltes, der einen erfindungsgemäßen Eingriff in die erste Regeleinrichtung durch die zweite Regeleinrichtung bewirkt, und einen zweiten entsprechend kleiner gewählten Grenzwert, der zu einer Abschaltung führt. Die erfindungsgemäße Regelung wird in den meisten Fällen ein Erreichen des zweiten Grenzwertes verhindern. Nur wenn die erfindungsgemäße Regelung die Störkräfte nicht ausreichend kompensieren kann und der zweite Grenzwert unterschritten wird, erfolgt aus Sicherheitsgründen eine Abschaltung des Antriebs.

Gemäß einer anderen bevorzugten Ausführungsform beeinflusst die zweite Regeleinrichtung einen Aktor, wenn der zeitliche Verlauf des die Lage des Läufers repräsentierenden Wertes eine Schwingung vorgegebener Amplitude und Frequenz aufweist. Wie bereits erläutert, können Verschiebungen des Läufers in der instabilen Richtung die Steifigkeit der magnetischen Lagerung in der stabilen Richtung negativ beeinflussen. Eine durch Störkräfte hervorgerufene Verschiebung der Lage des Läufers in seiner instabilen Richtung kann deshalb zu Schwingungen des Systems führen. Solche Schwingungen können sowohl mittels eines Lagesensors zur Erfassung der Lage in der instabilen Richtung als auch mittels eines Lagesensors zur Erfassung der Lage in der stabilen Richtung erfasst werden. Die Schwingungen können ebenfalls durch die Zustandsgrößen der ersten Regeleinrichtung erfasst werden, also zum Beispiel durch die Ausgangssignale eines Strom- oder Lagereglers der ersten Regeleinrichtung.

Gemäß einem weiteren Aspekt der vorliegenden Erfindung wird eine Offenend-Spinneinrichtung mit einem wie vorbeschriebenen elektrischen Antrieb und einem Spinnrotor vorgeschlagen. Der Spinnrotor umfasst einen Rotorschaft und eine Rotortasse. Dabei ist der Rotorschaft als Läufer des elektrischen Antriebs ausgebildet.

Bei einem magnetisch gelagerten Spinnrotor ist die magnetische Lagerung vorzugsweise so ausgebildet, dass die Lagerung in einer Richtung radial zum Rotorschaft beziehungsweise zum Läufer stabil und in einer Richtung axial zum Rotorschaft instabil ist.

Auf den Spinnrotor wirkt eine Vielzahl von Störeinflüssen. Das können äußere aber auch systembedingte Störeinflüsse sein. Äußere Störkräfte auf den Spinnrotor und damit auf den magnetisch gelagerten Läufer entstehen zum Beispiel durch unerwünschte Faserablagerungen, die auf den Spinnrotor drücken.

Systembedingte Störkräfte entstehen zum Beispiel durch die Rotation der Rotortasse selbst. Die Rotation der Rotortasse sorgt für eine Luftströmung, die den Spinnrotor in axialer Richtung verschiebt. Die Verschiebung hängt insbesondere von der Größe der Rotortasse und der Drehzahl ab. Weitere Einflussfaktoren, die die Lage des Spinnrotors beeinflussen, sind die Temperatur, die Feinheit des gesponnen Garns und die Größe des Unterdrucks in der Spinneinrichtung.

Der vorbeschriebene elektrische Antrieb stellt damit einen stabilen und störungsfreien Betrieb der Offenend-Spinneinrichtung sicher. Unnötige Abschaltungen der Offenend-Spinneinrichtung werden vermieden und die Produktivität erhöht.

Die Erfindung wird nachfolgend anhand eines in den Zeichnungen dargestellten Ausführungsbeispiels näher erläutert.

Es zeigen:
- Fig. 1: einen elektrischen Antrieb mit einem passiv magnetisch gelagerten Läufer gemäß dem Stand der Technik;
- Fig. 2: einen erfindungsgemäßen elektrischen Antrieb mit einem passiv magnetisch gelagerten Läufer gemäß einer ersten Ausführungsform;
- Fig. 3: einen erfindungsgemäßen elektrischen Antrieb mit einem passiv magnetisch gelagerten Läufer gemäß einer zweiten Ausführungsform;
- Fig. 4: einen erfindungsgemäßen elektrischen Antrieb mit einem passiv magnetisch gelagerten Läufer gemäß einer dritten Ausführungsform.

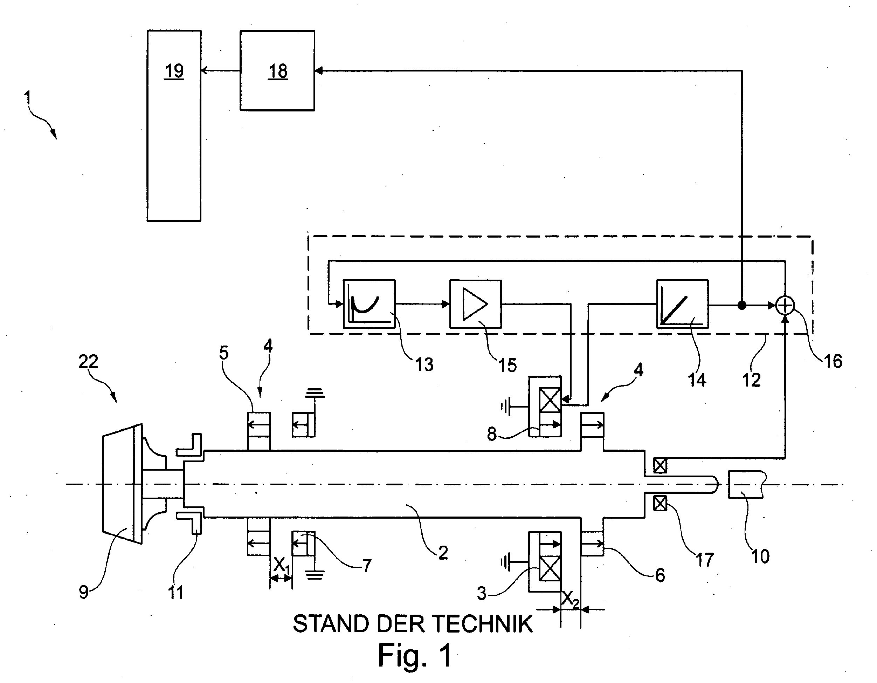

Die Fig. 1 zeigt eine Offenend-Spinneinrichtung mit einem elektrischen Antrieb 1 gemäß dem Stand der Technik. Von der Offenend-Spinneinrichtung ist hier nur der Spinnrotor 22 dargestellt. Der Spinnrotor 22 umfasst die Rotortasse 9 und den Rotorschaft 2. Die Rotortasse 2 rotiert zum Spinnen eines Fadens in bekannter Weise in einem mit Unterdruck beaufschlagten, nicht dargestellten Gehäuse.

Der Rotorschaft 2 ist als Läufer des elektrischen Antriebes 1 ausgebildet. Der Rotorschaft 2 ist passiv magnetisch gelagert. Von dem Antrieb 1 ist hier im Wesentlichen nur die magnetische Lagerung 4 dargestellt. Der Rotorschaft 2 ist passiv magnetisch gelagert. Der Rotorschaft 2 weist dazu an seinem vorderen Ende einen Magnetring 5 und an seinem hinteren Ende einen Magnetring 6 auf. Der Stator, das heißt der feststehende Teil des elektrischen Antriebs 1, weist zwei weitere Magnetringe 7 und 8 auf, die jeweils den Magnetringen 5 und 6 zugeordnet sind. Die Magnetringe 5, 6, 7 und 8 sind, wie durch die Pfeile angedeutet, axial magnetisiert. Die Magnetisierungsrichtung ist dabei derart, dass sich jeweils die Magnetringe 5 und 7 sowie die Magnetringe 6 und 8 anziehen. Die dargestellte magnetische Lagerung 4 ist radial stabil und axial instabil. Deshalb ist ein Aktor zur Regelung der Lage des Rotorschaftes 2 in Form einer Spule 3 vorhanden. Die Spule 3 ist um den Magnetring 8 gewickelt und erzeugt durch Bestromung ebenfalls ein axiales Magnetfeld. Die Bestromung der Spule 3 erfolgt mittels der Regeleinrichtung 12. Die Regeleinrichtung 12 führt eine sogenannte Nullstromregelung aus. Die Nullstromregelung bringt den Rotorschaft 2 in einen kräftefreien Schwebezustand, in dem die Spule 3 keinen Strom führt. Kräftefrei bedeutet dabei, dass sich alle auf den Rotorschaft 2 wirkenden Kräfte aufheben. Die Fig. 1 zeigt eine Lage des Rotorschaftes 2, in der sich der Rotorschaft 2 in einem kräftefreien Schwebezustand befindet. Die Anziehungskräfte zwischen Permanentmagneten hängen von deren Abständen ab. In vorliegendem Fall heißt das, die Anziehungskraft zwischen den Magnetringen 5 und 7 hängt von dem Abstand X₁ ab und die Anziehungskraft zwischen den Magnetringen 6 und 8 hängt von dem Abstand X₂ ab. Die Abstände X₁ und X₂ sind gleich. Der Rotorschaft 2 befindet sich im Gleichgewicht.

Zur Regelung des Stromes durch die Spule 3, allgemein durch den Aktor zur Regelung der Lage des Läufers 2 in der instabilen Richtung, werden der Regeleinrichtung 12 zwei Eingangsgrößen zugeführt. Das ist auf der einen Seite der gemessene Strom durch den Aktor und auf der anderen Seite die Lage des Läufers 2 in der instabilen Richtung, hier die axiale Richtung. Zur Erfassung der Lage des Läufers 2 in der instabilen Richtung ist ein Lagesensor 17 vorhanden. Die Regeleinrichtung 12 umfasst einen Lageregler 13, der hier als PID-Regler ausgebildet ist, und einen Stromregler 14, der hier als I-Regler beziehungsweise Integrator ausgebildet ist. Ein Addierer 16 verknüpft den Ausgang des Lagesensor 17 mit dem Ausgang des Stromreglers 14. Das Ergebnis wird dem Lageregler 13 als Eingangssignal zugeführt. Der Ausgang des Lagereglers 13 beaufschlagt über einen Leistungsverstärker 15 den Aktor 3 mit einem Strom. Der gemessene Strom durch den Aktor 3 bildet das Eingangssignal des Stromreglers 14. Bei dynamischen Störkräften bringt die Regeleinrichtung 12 den Läufer 2 durch kurzzeitige Bestromung des Aktors 3 wieder ins Gleichgewicht.

Der elektrische Antrieb 1 kann außerdem eine nicht dargestellte Dämpfungseinrichtung aufweisen, die die Lage des Läufers 2 in der stabilen Richtung, hier also in radialer Richtung, beeinflusst. Dazu weist die Dämpfungseinrichtung eine Sensorik zu Erfassung der Lage des Läufers 2 in der stabilen, hier radialen, Richtung auf.

Zum Schutz der magnetischen Lagerung ist am hinteren Ende des Läufers 2 ein Fanglager 10 und an seinem vorderen Ende ein Fanglager 11 angeordnet. Dazu sind die Abstände der Fanglager 10 und 11 von dem Läufer entsprechend geringer als die Abstände der Magnetringe 5 und 7, beziehungswiese 6 und 8. Nichtsdestotrotz kann bei hohen Drehzahlen des Läufers 2 ein Kontakt des Läufers 2 mit den Fanglagern 10 oder 11 zu Schäden führen. Deshalb werden die Lagerluftspalte, das heißt, die Abstände der Fanglager 10, 11 zu dem Läufer 2, überwacht. Die Lagerluftspalte werden bei Inbetriebnahme oder vor dem Hochlauf des Antriebes in bekannter Weise ausgemessen. Um Veränderungen der Lagerluftspalte zu erfassen, wird gemäß dem Stand der Technik ein Ausgangssignal der Regeleinrichtung 12, hier der Ausgang des Lagereglers 14, überwacht. Die Überwachung erfolgt mittels der Überwachungseinrichtung 18. Die erfassten Werte, beziehungsweise die daraus ermittelten Lagerluftspalte, werden mit zulässigen Grenzwerten verglichen. Bei Passieren der Grenzwerte überträgt die Überwachungseinrichtung 18 ein Abschaltsignal an die Steuereinrichtung 19 des elektrischen Antriebes 1. Die Steuereinrichtung 19 leitet dann die Abschaltung des Antriebes 1 ein. Das kann zum Beispiel durch entsprechende Bestromung einer nicht dargestellten Statorwicklung erfolgen, die eine kontinuierliche Reduzierung der Drehzahl des Antriebes 1 bewirkt.

Durch weniger dynamische oder stationäre Störkräfte verschiebt sich das kräftefreie Gleichgewicht des Läufers 2. Regeleinrichtung 12 vermag nur dynamische Störkräfte aus zu regeln. Gemäß dem Stand der Technik werden solche Verschiebung toleriert, bis die vorgegebenen Grenzwerte überschritten werden.

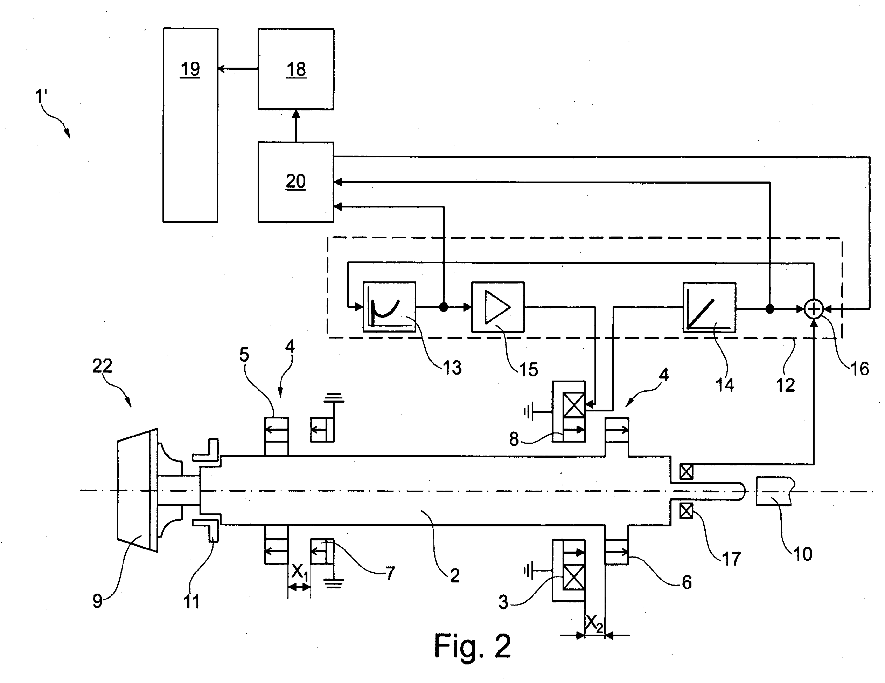

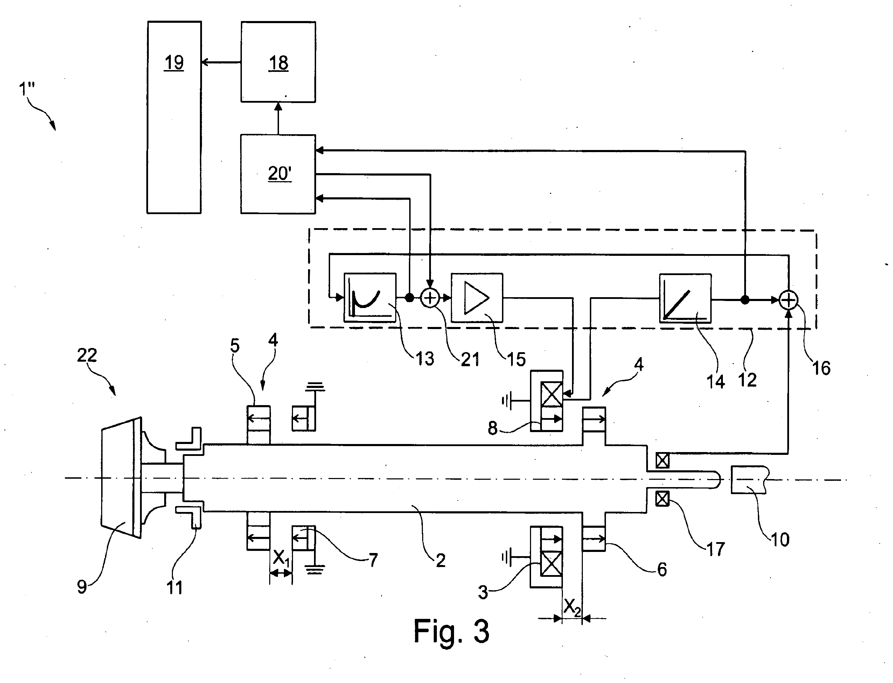

Gemäß der vorliegenden Erfindung kann bei Verschiebungen des kräftefreien Gleichgewichts des Läufers 2 durch Störkräfte ein Eingriff in die Regeleinrichtung 12 erfolgen, um der Verschiebung entgegenzuwirken. Die Fig. 2 und 3 zeigen aufbauend auf dem elektrischen Antrieb 1 der Fig. 1 jeweils einen erfindungsgemäßen Antrieb 1' beziehungsweise 1". Für unveränderte Elemente wurden die gleichen Bezugszeichen gewählt, wie in Fig.1. Im Folgenden wird deshalb nur auf die erfindungsgemäßen Anpassungen gegenüber dem Stand der Technik eingegangen. Beide elektrischen Antriebe 1' und 1" weisen eine zusätzliche Regeleinrichtung 20 beziehungsweise 20' auf. Beiden Regeleinrichtungen 20 und 20' werden als Eingangssignale die Ausgangssignale des Lagereglers 13 und des Stromreglers 14 zugeführt. Es ist auch möglich, nur eines der beiden Signale auszuwerten. Alternativ können auch direkt die Signale des Lagesensors 17, der die Lage des Läufers 2 in der stabilen, hier axialen, Richtung misst, ausgewertet werden. Oder es können die Signale des nicht dargestellten Lagesensors zur Erfassung der Lage in der stabilen, hier radialen, Richtung verwendet werden. Die Auswertung dieser die Lage des Läufers 2 anzeigenden Werte in den Regeleinrichtungen 20, 20' kann in der bereits beschriebenen Weise erfolgen, um eine unerwünschte Verschiebung des kräftefreien Schwebezustandes des Läufers 2 zu erfassen. Wenn eine solche Verschiebung ermittelt wird, greift die Regeleinrichtung 20 beziehungsweise 20' in die Regeleinrichtung 12 durch Addition eines Offsets ein. Gemäß Fig. 2 generiert die Regeleinrichtung 20 einen Offset, der mittels des Addierers 16 auf den Ausgang des Stromreglers 14 aufaddiert wird. Gemäß Fig. 3 generiert die Regeleinrichtung 20' einen Offset, der mittels des Addierers 21 auf den Ausgang des Lagereglers 13 aufaddiert wird. In beiden bewirkt der Offset, dass der Strom durch den Aktor 3 nicht zu Null geregelt wird, sondern auf einen von Null verschiedenen durch die Größe des Offsets vorgegebenen Aktorstrom regelt. Aufgrund des Aktorstromes erzeugt der Aktor 3 eine Kraft, die der Störkraft entgegenwirkt, so dass der kräftefreie Schwebezustand wieder in die gewünschte Position geschoben wird.

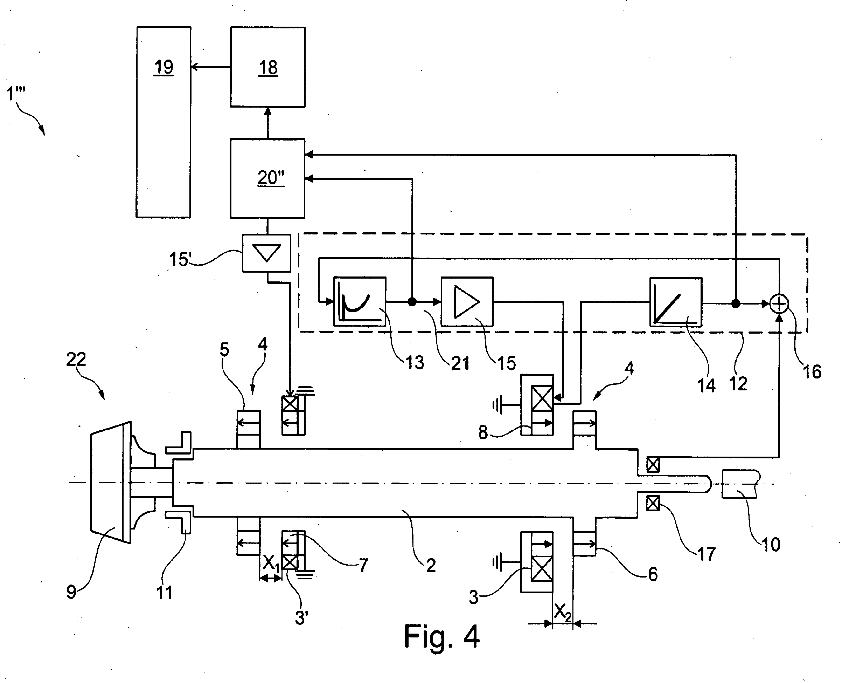

Die Fig. 4 zeigt eine weitere Ausführungsform der vorliegenden Erfindung. Entsprechend den Regeleinrichtungen 20 und 20' wertet die Regeleinrichtung 20" die Ausgangssignale des Lagereglers 13 oder des Stromreglers 14 aus. Die anderen beschriebenen Eingangssignale sind auch hier möglich. Abweichend von den vorherigen Beispielen ist der Regeleinrichtung 20" jedoch ein eigener Aktor 3' zugeordnet. Der Aktor 3' kann über den Leistungsverstärker 15' von der Regeleinrichtung 20" mit einem Strom beaufschlagt werden, um Verschiebungen des Läufers 2 zu kompensieren.

Alle Regeleinrichtungen 20, 20' und 20" übermitteln Informationen über die Lage des Läufers 2 an die bekannte Überwachungseinrichtung 18, die bei Passieren bestimmter Grenzwerte eine Abschaltung initiiert.

## Patentansprüche

1. Elektrischer Antrieb (1', 1", 1'''), umfassend
einen passiv magnetisch gelagerten Läufer (2),
mindestens einen Aktor (3) zur Regelung der Lage des Läufers (2) in der instabilen Richtung der magnetischen Lagerung (4),
eine erste Regeleinrichtung (12) zur Regelung der Lage des Läufers (2) in der instabilen Richtung,
wobei die erste Regeleinrichtung (12) dazu ausgebildet ist, einen Aktor (3) zur Regelung der Lage des Läufers (2) in der instabilen Richtung mit einem Strom zu beaufschlagen und die Lage des Läufers (2) in der instabilen Richtung so zu regeln, dass der Aktor (3) im stationären Zustand keinen Strom führt,
**dadurch gekennzeichnet,**
**dass** eine zweite Regeleinrichtung (20, 20') zur Regelung der Lage des Läufers (2) in der instabilen Richtung vorhanden ist,
**dass** die zweite Regeleinrichtung (20, 20', 20") dazu ausgebildet ist, einen die Lage des Läufers (2) repräsentierenden Wert auszuwerten und in Abhängigkeit des Wertes einen Aktor (3, 3') zur Regelung der Lage in der instabilen Richtung so zu beeinflussen, dass der Aktor (3, 3') im stationären Zustand einen vorgegebenen stationären Aktorstrom führt.

2. Elektrischer Antrieb (1', 1") nach Anspruch 1, **dadurch gekennzeichnet, dass** der ersten Regeleinrichtung und der zweiten Regeleinrichtung (20, 20') ein gemeinsamer Aktor (3) zur Regelung der Lage in der instabilen zugeordnet ist und die zweite Regeleinrichtung (20, 20') dazu ausgebildet ist, zur Beeinflussung des Aktors (3) die erste Regeleinrichtung (12) zu beeinflussen.

3. Elektrischer Antrieb (1', 1") nach Anspruch 2, **dadurch gekennzeichnet, dass** die zweite Regeleinrichtung (20, 20') die erste Regeleinrichtung (12) derart beeinflusst, dass innerhalb der Regelung der ersten Regeleinrichtung (12) ein Offset aufaddiert wird.

4. Elektrischer Antrieb (1', 1") nach Anspruch 3, **dadurch gekennzeichnet, dass** die erste Regeleinrichtung (12) einen Stromregler (14) und einen Lageregler (13) umfasst.

5. Elektrischer Antrieb (1', 1") nach Anspruch 4, **dadurch gekennzeichnet, dass** der Offset am Ausgang des Stromreglers (14) aufaddiert wird.

6. Elektrischer Antrieb (1', 1") nach Anspruch 4, **dadurch gekennzeichnet, dass** der Offset am Ausgang des Lagereglers (13) aufaddiert wird.

7. Elektrischer Antrieb (1', 1", 1''') nach einem der vorherigen Ansprüche, **dadurch gekennzeichnet, dass** der Antrieb einen Lagesensor (17) zur Erfassung der Lage des magnetisch gelagerten Läufers (2) aufweist und der die Lage des Läufers (2) repräsentierende Wert von dem Signal des Lagesensors (17) abhängt.

8. Elektrischer Antrieb (1', 1") nach einem der Ansprüche 4 bis 7, **dadurch gekennzeichnet, dass** der die Lage des Läufers (2) repräsentierende Wert von dem Ausgang des Stromreglers (14) abhängt.

9. Elektrischer Antrieb (1', 1") nach einem der Ansprüche 4 bis 7, **dadurch gekennzeichnet, dass** der die Lage des Läufers (2) repräsentierende Wert von dem Ausgang des Lagereglers (13) abhängt.

10. Elektrischer Antrieb (1', 1", 1''') nach einem der vorherigen Ansprüche, **dadurch gekennzeichnet, dass** der magnetischen Lagerung (4) des Läufers ein Fanglager (10, 11) zugeordnet ist, zu dem der Läufer (2) im Betrieb durch einen Lagerluftspalt beabstandet ist und dass die zweite Regeleinrichtung (20, 20', 20") einen Aktor (3, 3') beeinflusst, wenn der die Lage des Läufers (2) repräsentierende Wert das Unterschreiten eines vorgegebenen Grenzwertes des Lagerluftspaltes anzeigt.

11. Elektrischer Antrieb (1', 1") nach einem der vorherigen Ansprüche, **dadurch gekennzeichnet, dass** die zweite Regeleinrichtung (20, 20', 20") einen Aktor (3, 3') beeinflusst, wenn der zeitliche Verlauf des die Lage des Läufers (2) repräsentierenden Wertes eine Schwingung vorgegebener Amplitude und Frequenz aufweist.

12. Offenend-Spinneinrichtung mit einem elektrischen Antrieb (1', 1") nach einem der Ansprüche 1 bis 11 und einem Spinnrotor (22), umfassend einen Rotorschaft und eine Rotortasse (9), wobei der Rotorschaft als Läufer (2) des elektrischen Antriebs (1', 1") ausgebildet ist.

## Claims

1. An electric drive (1', 1", 1''') comprising
a passively magnetically supported rotor (2),
at least one actuator (3) for controlling the position of the rotor (2) in the unstable direction of the magnetic bearing (4),
a first control device (12) for controlling the position of the rotor (2) in the unstable direction,
the first control device (12) being designed to apply a current to an actuator (3) for controlling the position of the rotor (2) in the unstable direction and to control the position of the rotor (2) in the unstable direction in such a way that the actuator (3) does not conduct a current in the stationary state,
**characterised in that**,
a second control device (20, 20') is present for controlling the position of the rotor (2) in the unstable direction,
that the second control device (20, 20', 20") is designed to evaluate a value representing the position of the rotor (2) and, as a function of the value, to influence an actuator (3, 3') for controlling the position in the unstable direction in such a way that the actuator (3, 3') conducts a predetermined stationary actuator current in the stationary state.

2. Electric drive (1', 1") according to Claim 1, **characterised in that** the first control device and the second control device (20, 20') are assigned a common actuator (3) for controlling the position in the unstable one, and the second control device (20, 20') is designed to influence the first control device (12) of the actuator (3).

3. Electric drive (1', 1") according to Claim 2, **characterised in that** the second control device (20, 20') influences the first control device (12) in such a way that an offset is added up within the control of the first control device (12).

4. Electric drive (1', 1") according to Claim 3, **characterised in that** the first control device (12) comprises a current controller (14) and a position controller (13).

5. Electric drive (1', 1") according to Claim 4, **characterised in that** the offset is added up at the output of the current controller (14).

6. Electric drive (1', 1") according to Claim 4, **characterised in that** the offset is added up at the output of the position controller (13).

7. Electric drive (1', 1", 1''') according to one of the aforementioned claims, **characterised in that** the drive has a position sensor (17) for detecting the position of the magnetically mounted rotor (2) and the value representing the position of the rotor (2) depends on the signal of the position sensor (17).

8. Electric drive (1', 1") according to one of Claims 4 to 7, **characterised in that** the value representing the position of the rotor (2) depends on the output of the current regulator (14).

9. Electric drive (1', 1") according to one of Claims 4 to 7, **characterised in that** the value representing the position of the rotor (2) depends on the output of the position controller (13).

10. Electric drive (1', 1", 1''') according to one of the aforementioned claims, **characterised in that** the magnetic bearing (4) of the rotor is assigned a back-up bearing (10, 11) from which the rotor (2) is spaced apart during operation by a bearing clearance gap, and **in that** the second control device (20, 20', 20") influences an actuator (3, 3') if the value representing the position of the rotor (2) indicates that the bearing clearance gap has fallen below a predetermined limit value.

11. Electric drive (1', 1") according to one of the aforementioned claims, **characterised in that** the second control device (20, 20', 20") influences an actuator (3, 3') if the time characteristic of the value representing the position of the rotor (2) has an oscillation of predetermined amplitude and frequency.

12. Open-end spinning machine having an electric drive (1', 1") according to one of Claims 1 to 11 and a spinning rotor (22) comprising a rotor shaft and a rotor cup (9), the rotor shaft being designed as a rotor (2) of the electric drive (1', 1").

## Revendications

1. Entraînement électrique (1', 1", 1'''), comprenant
un rotor coureur passif à roulement magnétique (2),
au moins un actionneur (3) pour la régulation de la position du rotor coureur (2) dans la direction instable du roulement magnétique (4),
un premier dispositif de régulation (12) pour la régulation de la position du rotor coureur (2) dans la direction instable,
sachant que le premier dispositif de régulation (12) est conçu pour soumettre un actionneur (3) pour la régulation de la position du rotor coureur (2) dans la direction instable à un courant et à réguler la position du rotor coureur (2) dans la direction instable de manière à ce que l'actionneur (3) ne conduise pas de courant à l'état stationnaire,
**caractérisé par le fait**
**qu'**un deuxième dispositif de régulation (20, 20') soit présent pour la régulation de la position du rotor coureur (2) dans la direction instable,
**que** le deuxième dispositif de régulation (20, 20', 20") soit conçu pour évaluer une valeur représentant la position du rotor coureur (2) et pour influencer un actionneur (3, 3') pour la régulation de la position du rotor coureur dans la direction instable de manière à ce que l'actionneur (3, 3') conduise, à l'état stationnaire, un courant d'actionneur stationnaire défini.

2. Entraînement électrique (1', 1") selon la revendication 1, **caractérisé par le fait que** un actionneur commun (3) soit affecté au premier dispositif de régulation et au deuxième dispositif de régulation (20, 20') pour la régulation de la position dans la direction instable et que le deuxième dispositif de régulation (20, 20') soit conçu pour influencer le premier dispositif de régulation (12) pour l'influence de l'actionneur (3).

3. Entraînement électrique (1', 1") selon la revendication 2, **caractérisé par le fait que** le deuxième dispositif de régulation (20, 20') influence le premier dispositif de régulation (12) de manière à ajouter un offset pendant la régulation du premier dispositif de régulation (12).

4. Entraînement électrique (1', 1") selon la revendication 3, **caractérisée en ce que** le premier dispositif de régulation (12) comprenne un régulateur de courant (14) et un régulateur de position (13).

5. Entraînement électrique (1', 1") selon la revendication 4, **caractérisée en ce que** l'offset en sortie du régulateur de courant (14) soit ajouté.

6. Entraînement électrique (1', 1") selon la revendication 4, **caractérisée en ce que** l'offset à la sortie du régulateur de position (13) soit ajouté.

7. Entraînement électrique (1', 1", 1''') selon l'une des revendications précédentes, **caractérisé par le fait que** l'entraînement dispose d'un capteur de position (17) pour la saisie de la position du rotor coureur à roulement magnétique (2) et que la position du rotor coureur sur roulement (2) dépende de la valeur représentante du signal du capteur de position (17).

8. Entraînement électrique (1', 1") selon l'une des revendications de 4 à 7, **caractérisé par le fait que** la valeur représentant la position du rotor coureur (2) dépende de la sortie du régulateur de courant (14).

9. Entraînement électrique (1', 1") selon l'une des revendications de 4 à 7, **caractérisé par le fait que** la valeur représentant la position du rotor coureur (2) dépende de la sortie du régulateur de position (13).

10. Entraînement électrique (1', 1", 1''') selon l'une des revendications précédentes, **caractérisé par le fait que** un roulement supplémentaire (10, 11) soit affecté au roulement magnétique (4) du rotor coureur duquel le rotor coureur (2) en fonctionnement est distant, par un espace d'air de roulement, et que le deuxième dispositif de régulation (20, 20', 20") influence un actionneur (3, 3') lorsque la valeur représentant la position du rotor coureur (2) affiche une non atteinte d'un seuil prescrit de l'espace d'air de roulement.

11. Entraînement électrique (1', 1") selon l'une des revendications précédentes, **caractérisé par le fait que** le deuxième dispositif de régulation (20, 20', 20") influence un actionneur (3, 3') lorsque le déroulement temporelle de la valeur représentant la position du rotor coureur (2) présente une oscillation d'une amplitude et d'une fréquence prescrites.

12. Dispositif de filage à bout libre avec un entraînement électrique (1', 1") selon l'une des revendications de 1 à 11 et un rotor de filage (22), comprenant un arbre de rotor et une cloche de rotor (9), sachant que l'arbre du rotor est conçu sous la forme d'un rotor coureur (2) de l'entraînement électrique (1', 1").
